(19) **Europäisches Patentamt**

**European Patent Office**

**Office européen des brevets**

(11) **EP 0 568 861 B1**

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int. Cl.$^6$: **C04B 35/58**, C04B 35/56

(21) Anmeldenummer: **93106463.8**

(22) Anmeldetag: **21.04.1993**

(54) **Feinteilige Nichtoxid-Keramikpulver**

Finely divided non-oxide ceramic powders

Poudres céramiques non-oxydes finement divisées

(84) Benannte Vertragsstaaten:
**AT CH DE FR GB LI LU SE**

(30) Priorität: **04.05.1992 DE 4214725**

(43) Veröffentlichungstag der Anmeldung:
**10.11.1993 Patentblatt 1993/45**

(73) Patentinhaber: **H.C. Starck GmbH & Co. KG**
**D-38642 Goslar (DE)**

(72) Erfinder:
- **König, Theo, Dr.**
  **W-7887 Laufenburg-Rotzel (DE)**
- **Fister, Dietmar, Dr.**
  **W-7886 Murg-Niederhof (DE)**

(74) Vertreter: **Steiling, Lothar, Dr. et al**
**D-51368 Leverkusen (DE)**

(56) Entgegenhaltungen:
EP-A- 0 151 490          EP-A- 0 251 322
EP-A- 0 347 566          EP-A- 0 362 605
DE-A- 3 536 933          US-A- 4 889 665

## Beschreibung

Die vorliegende Erfindung betrifft feinteilige Nichtoxid-Keramikpulver MeX, wobei

Me = B, Al, Si, Ti, Zr, Hf, V, Y, Ta, Nb, Mo, W, La, Fe, Co, Ni und/oder Cr und

X = C, N, B und Si oder Kombinationen daraus, mit Ausnahme von $Si_3N_4$ größer als 100 nm und AlN größer als 200 nm, bedeutet.

Für die mechanischen Eigenschaften von pulvermetallurgisch oder pulverkeramisch hergestellten Bauteilen sind die Eigenschaften der Ausgangspulver von entscheidender Bedeutung. Insbesondere eine enge Teilchengrößenverteilung, hohe Pulverreinheit und fehlende Grobkornanteile bzw. Agglomerate wirken sich positiv auf die Eigenschaften entsprechender Bauteile aus.

Zur technischen Herstellung von feinen Metall- und Keramikpulvern sind zahlreiche Verfahren bekannt geworden.

Neben den rein mechanischen Zerkleinerungs- und Klassierverfahren, die den Nachteil haben, daß nur Pulver bis zu einer bestimmten Feinheit und mit relativ breiter Kornverteilung herstellbar sind, wurden auch eine Vielzahl von Verfahren zur Abscheidung aus der Gasphase vorgeschlagen.

Durch zum Teil sehr kleine Energiequellen, wie z.B. thermisches Plasma oder Laserstrahl, oder bei turbulenten Flammen, wie z.B. einem Chlorknallgasbrenner, ist die Kornverteilung und Korngröße der hergestellten Pulver nicht exakt steuerbar, und üblicherweise führen die Reaktionsbedingungen zu einer breiten Kornverteilung sowie zum Auftreten von Einzelteilchen, deren Durchmesser ein Vielfaches der Durchschnittskorngröße beträgt.

Nach dem derzeit bekannt gewordenen großtechnischen Pulverherstellungsverfahren ist es kaum oder nur sehr schwer möglich, Pulver mit Durchschnittskorngrößen von < 0,5 μm, gemessen nach FSSS (und nicht Einzelteilchengröße), herzustellen. Bei diesen konventionell hergestellten feinen Pulvern läßt es sich praktisch nicht ausschließen, daß ein gewisser Prozentsatz an Grobkorn im Material enthalten ist, der sich schädlich auf die mechanischen Eigenschaften daraus hergestellter Bauteile auswirkt. Auch erhält man bei herkömmlichen Mahlverfahren eine sehr breite Kornverteilung, die bei diesen Pulvern auch nicht durch Sichtschritte wesentlich eingeengt werden kann.

Bisher bekannt gewordene Verfahren zur Herstellung von Feinstpulvern über die Gasphase arbeiten zum Teil zweistufig, wobei die zweite Stufe dazu dient, das mehr oder weniger amorphe Zwischenprodukt in kristalline Form überzuführen und unerwünschte Nebenprodukte aus der Reaktion abzutrennen.

Andere Gasphasenverfahren arbeiten nicht mit einem strömungstechnisch optimierten Heißwandreaktor, sondern verwenden zur Umsetzung eine Plasmaflamme oder andere Energieträger wie Laserstrahlen. Nachteile dieser Verfahren sind im wesentlichen die in der Praxis nicht kontrollierbaren Reaktionsbedingungen in verschiedenen Bereichen der Reaktionszone mit sehr großen Temperaturgradienten und/oder turbulenten Strömungen. Dadurch entstehen Pulver mit breiter Kornverteilung.

Es sind zahlreiche Vorschläge für Verfahren zur Herstellung von Feinsthartstoffpulvern gemacht worden, die aber alle mit Nachteilen behaftet sind. So weist auch das in der US-A 4.994.107 offenbarte Verfahren, in dem ein Rohrreaktor zur Herstellung gleichmäßiger, nicht agglomerierter Pulver beschrieben wird, erhebliche Nachteile für die Praxis auf. Wegen der Mischung aller Reaktionspartner vor der heißen Zone findet kein definierter Beginn der Keimbildungsreaktion statt. Auch können Wandreaktionen nicht verhindert werden. Dadurch erhöht sich die Gefahr, daß große Teilchen in das sonst feine Pulver gelangen und nicht mehr entfernt werden können.

Die EP-A 0 379 910 beschreibt ein Zweistufenverfahren zur Herstellung von $Si_3N_4$ aus der Gasphase, bei dem das Ausgangshalogenid flüssig über eine Zweistoffdüse in den Reaktorraum eingeblasen wird. Auch nach diesem Verfahren ist die Bereitstellung eines befriedigenden Pulvers nicht möglich.

Andere Vorschläge zur Herstellung von sehr feinen gleichmäßigen Pulvern sind die Umsetzung in Unterdruck, aber auch verschiedene Sol-Gel-Verfahren. Auch diese Vorschläge weisen Nachteile, wie Mehrstufigkeit, schlechte Steuerbarkeit der Korngröße, Kornverteilung und Chargenbetrieb, auf.

Auch die vorgeschlagenen Plasma-, Laser- oder Explosionsverfahren (EP-A 0 152 957, EP-A 0 151 490) weisen die genannten Nachteile auf.

Auch die Herstellung von feinen Pulvern durch speziell geführte magnesiothermische Umsetzung der entsprechenden Metallchloride zur Herstellung von z.B. TiN oder TiC erreicht nicht die Feinheit und Gleichmäßigkeit der nach dem vorgeschlagenen Verfahren hergestellten Pulver (G.W. Elger, Met. Transactions 20 B, 8, 1989, S. 493-497).

Ebenso entsprechen die in US-A 4 642 207, US-A 4 689 075, EP-A 152 957 und EP-A 151 490 offenbarten Verfahren, die das Verdampfen von Metall durch Lichtbogen- oder Elektronenstrahl sowie Reaktion gasförmiger Reaktionspartner in einer Glimmentladung betreffen nicht den Anforderungen an ein unter wirtschaftlichen Gesichtspunkten zu betreibendes Verfahren zur Herstellung von sehr gleichmäßigen und sehr feinen Pulvern.

Aus der DE-A 3 536 933 sind amorphe $Si_3N_4$-Pulver mit einer Korngröße von 0,1 bis 1 μm und kristalline $Si_3N_4$-Pulver mit Korngrößen von 0,15 bis 1,0 μm bekannt. In der DE-A 3 833 382 werden AlN-Pulver mit kleinsten Korngrößen von etwa 0,3 μm beschrieben.

Auf der Suche nach Nichtoxid-Keramiken mit verbesserten mechanischen, elektrischen und magnetischen Eigenschaften werden immer feinere Nichtoxid-Keramikpulver verlangt.

Nach dem Edelgaskondensationsverfahren ist zuvor die Herstellung feinster Nichtoxid-Keramikpulver im Nanometer-Bereich möglich. Hierbei können allerdings nur Mengen im Milligramm-Bereich hergestellt werden. Auch fallen sie nicht in enger Teilchengrößenverteilung an.

Aufgabe dieser Erfindung ist somit die Bereitstellung von Pulvern, welche die beschriebenen Nachteile der Pulver des Standes der Technik nicht aufweisen.

Es wurden nun Pulver gefunden, welche diese Forderungen erfüllen. Diese Pulver sind Gegenstand dieser Erfindung.

Gegenstand dieser Erfindung sind somit feinteilige Nichtoxid-Keramikpulver MeX, wobei

Me =    B, Al, Si, Ti, Zr, Hf, V, Y, Ta, Nb, Mo, W, La, Fe, Co, Ni und/oder Cr und

X =    C, N, B und Si oder Kombinationen daraus mit Ausnahme von $Si_3N_4$ größer als 100 nm und AlN größer als 200 nm,

wobei sie eine Partikelgröße zwischen 1,0 nm und 500 nm aufweisen und weniger als 1 % der Einzelpartikel eine Abweichung von mehr als 40 % und keine Einzelpartikel eine Abweichung von mehr als 60 % von der mittleren Korngröße aufweisen.

Bevorzugt weisen weniger als 1 % der Einzelpartikel eine Abweichung von mehr als 20 % und keine Einzelpartikel eine Abweichung von mehr als 50 % von der mittleren Korngröße auf, besonders weisen weniger als 1 % der Einzelpartikel eine Abweichung von mehr als 10 % und keine Einzelpartikel eine Abweichung von mehr als 40 % von der mittleren Korngröße auf.

Die erfindungsgemäßen Pulver haben bevorzugt Partikelgrößen von 1 bis kleiner 100 nm, bevorzugt 1 bis kleiner 50 nm.

Bevorzugte Nichtoxid-Keramikpulver sind WC, SiC, $B_4C$, ZrC, VC, HfC, $Mo_2C$, $Cr_3C_2$ oder Nitride der Elemente B, Al, Si, Ti, Zr, Hf, V, Nb, Ta, Mo und W. Auch $MoSi_2$ und $TiB_2$ sind bevorzugt. Die erfindungsgemäßen Pulver weisen eine hohe Reinheit auf. So beträgt der Sauerstoffgehalt bevorzugt weniger als 5 000 ppm, besonders bevorzugt weniger als 1 000 ppm. Besonders reine erfindungsgemäße Pulver sind dadurch gekennzeichnet, daß sie einen Sauerstoffgehalt von weniger als 100 ppm, bevorzugt weniger als 50 ppm, aufweisen.

Auch die nichtoxidischen Verunreinigungen sind sehr gering. So beträgt bevorzugt die Summe ihrer Verunreinigungen, mit Ausnahme der oxidischen Verunreinigungen, kleiner als 5.000 ppm, besonders bevorzugt kleiner als 1.000 ppm.

In einer ganz bevorzugten Ausführungsform beträgt die Summe ihrer Verunreinigungen, mit Ausnahme der oxidischen Verunreinigungen, kleiner als 200 ppm.

Die erfindungsgemäßen Pulver sind im technischen Maßstab erhältlich und liegen somit bevorzugt in Mengen von mehr als 1 kg vor.

Die erfindungsgemäßen Pulver sind erhältlich in einem Verfahren zur Herstellung feinteiliger Keramikpulver durch Reaktion entsprechender Metallverbindungen und entsprechender Reaktionspartner in der Gasphase -CVR-, wobei die Metallverbindung(en) und die weiteren Reaktionspartner in einem Reaktor im gasförmigen Zustand zur Reaktion gebracht, direkt aus der Gasphase homogen unter Ausschluß jeglicher Wandreaktion auskondensiert und anschließend vom Reaktionsmedium abgetrennt werden, welches dadurch gekennzeichnet ist, daß die Metallverbindungen und die Reaktionspartner getrennt voneinander mindestens mit Reaktionstemperatur in den Reaktor eingebracht werden. Für den Fall, daß mehrere Metallverbindungen und/oder Reaktionspartner eingebracht werden sollen, sind die jeweiligen Gasmischungen so zu wählen, daß während des Aufheizens keine Reaktion auftritt, die zu festen Reaktionsprodukten führt. Besonders vorteilhaft läßt sich dieses Verfahren in einem Rohrreaktor durchführen. Es ist besonders günstig, wenn die Metallverbindungen, die Reaktionspartner und die Produktpartikel den Reaktor laminar durchströmen.

Durch das getrennte Vorerhitzen der Prozeßgase auf mindestens Reaktionstemperatur läßt sich der Ort der Keimbildung eingrenzen. Die laminare Strömung im Reaktor stellt eine enge Verweilzeitverteilung der Keime bzw. der Partikel sicher. Auf diese Weise läßt sich eine sehr enge Korngrößenverteilung erreichen.

Bevorzugt sollten somit die Metallverbindungen und die Reaktionspartner als koaxiale laminare Teilströme in den Reaktor eingebracht werden.

Um jedoch die Durchmischung der beiden koaxialen Teilströme sicherzustellen, wird durch Einbau eines Störkörpers in der sonst streng laminaren Strömung eine in Intensität und Aufweitung definierte Karman'sche Wirbelstraße erzeugt.

Eine bevorzugte Ausführungsform dieses Verfahrens besteht also darin, daß die koaxialen, laminaren Teilströme der Metallverbindung(en) und der Reaktionspartner mittels einer Karman'schen Wirbelstraße in definierter Weise vermischt werden.

Um die energetisch stark bevorzugte Abscheidung der Reaktionsteilnehmer an der Reaktorwand zu verhindern, wird bevorzugt das Reaktonsmedium von der Reaktionswand durch eine Inertgasschicht abgeschirmt. Dies kann dadurch erfolgen, daß durch speziell geformte Ringspalte in der Reaktorwand ein Inertgasstrom eingebracht wird, der über den Coandaeffekt an der Reaktorwand anliegt. Die im Reaktor durch eine homogene Abscheidung aus der Gasphase bei typischen Verweilzeiten zwischen 10 und 300 msec entstandenen Keramikpulverpartikel verlassen diesen gemeinsam mit den gasförmigen Reaktionsprodukten (z.B. HCl), den nicht umgesetzten Reaktanten und den Inertgasen, die als Trägergas, Spülgas und zum Zwecke der Verminderung der HCl-Adsorption eingeblasen werden. Nach dem erfindungsgemäßen Verfahren sind Ausbeuten, bezogen auf die Metallkomponente, von bis zu 100 % erzielbar.

Vorzugsweise wird dann die Abtrennung der oder Keramikpulver bei Temperaturen oberhalb der Siede- bzw. Sublimationstemperaturen der eingesetzten Metallverbindungen, Reaktionspartner und/oder während der Reaktion gebildeten Zwangsanfallsprodukte vorgenommen. Die Abtrennung kann dabei vorteilhaft in einem Rückblasfilter vorgenommen werden. Wenn dieser bei hohen Temperaturen von z.B. 600°C betrieben wird, kann die Adsorption der Gase, insbesondere der nicht inerten Gase wie HCl, $NH_3$, $TiCl_4$ usw., an der sehr großen Oberfläche der Keramik-oder Metallpulver gering gehalten werden. Insbesondere wird bei der Herstellung von Nitriden die Bildung von $NH_4Cl$ verhindert (größer als 350°C).

Die noch verbliebenen, an der Pulveroberflächen adsorbierten störenden Substanzen können in einem nachgeschalteten Vakuumbehälter weiter entfernt werden, vorzugsweise wieder bei Temperaturen von ca. 600°C. Die fertigen Pulver sollten dann unter Luftausschluß aus der Anlage ausgetragen werden.

Bevorzugte Metallverbindungen im Sinne dieser Erfindung sind eine oder mehrere aus der Gruppe $BCl_3$, Borsäureester, Borane, $SiCl_4$, andere Chlorsilane, Silane, Metallhalogenide, teilweise hydrierte Metallhalogenide, Metallhydride, Metallalkoholate, Metallalkyle, Metallamide, Metallazide, Metallboranate und Metallcarbonyle.

Bevorzugte weitere Reaktionspartner sind einer oder mehrere aus der Gruppe $H_2$, $NH_3$, Hydrazin, Amine, $CH_4$, andere Alkane, Alkene, Alkine, Aryle, $O_2$, Luft, $BCl_3$, Borsäureester, Borane, $SiCl_4$, andere Chlorsilane und Silane.

Die erfindungsgemäßen Pulver können nano- oder mikrodisperse (kristallin oder amorph) Keramikpulver sein, wobei bevorzugte Keramikpulver, Carbide, Nitride, Boride, Silizide, Phosphite, Sulfide, Oxide und/oder Kombinationen daraus der Elemente B, Al, Si, Ti, Zr, Hf, Y, V, Nb, Ta, Cr, Mo, W, La, Y, Fe, Co, Ni oder diese Elemente alleine oder in Kombination miteinander sind.

Es ist möglich, nach diesem Verfahren Keramikpulver mit einer einstellbaren Partikelgröße zwischen 1 und 3000 nm (3 µm) herzustellen, die eine extrem enge Teilchengrößenverteilung aufweisen. Charakteristisch für die erfindungsgemäßen Teilchen ist das vollständige Fehlen von Partikeln, die wesentlich größer als die Durchschnittskorngröße sind.

Weitere Charakteristika der Pulver sind ihre hohe Reinheit, hohe Oberflächenreinheit und gute Reproduzierbarkeit.

Je nach Korngröße und Stoff können die erfindungsgemäßen Pulver sehr luftempfindlich bis pyrophor sein, Um diese Eigenschaft zu beseitigen, können diese Pulver in defenierter Weise durch Beaufschlagen mit Gas/Dampfgemischen oberflächenmodifiziert werden.

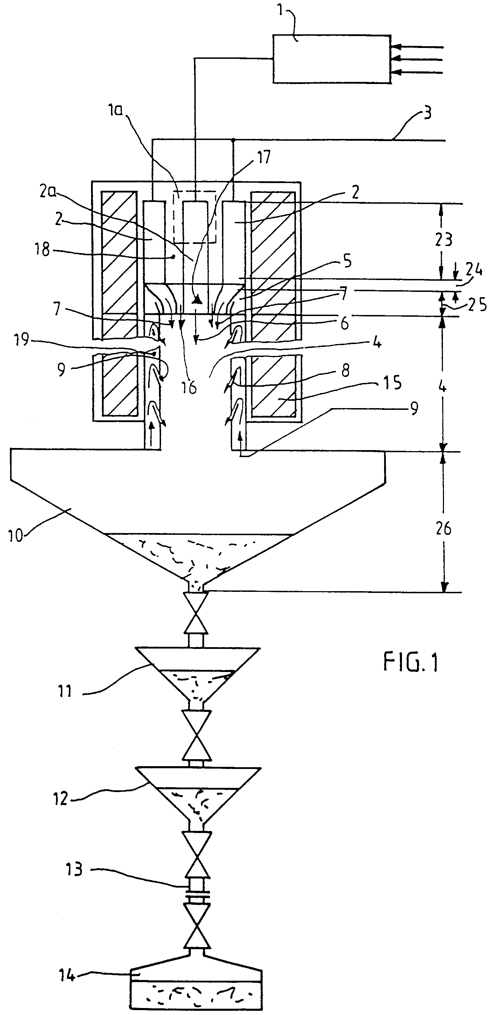

Fig. 1 ist die schematische Darstellung einer Vorrichtung, mit der dieses Verfahren durchführbar ist. Anhand der Fig. 1 wird im folgenden die Durchführung dieses Verfahrens erläutert, Die dabei explizit genannten Verfahrens-, Stoff-und/oder Vorrichtungsparameter stellen dabei nur ausgewählte Möglichkeiten von vielen dar und schränken somit die Erfindung nicht ein.

Die festen, flüssigen oder gasförmigen Metallverbindungen werden in einen außerhalb angebrachten Verdampfer (1) oder einen innerhalb des Hochtemperaturofens angebrachten Verdampfer (1a) dosiert, dort bei Temperaturen von 200°C bis 2000°C verdampft und mit einem inerten Trägergas ($N_2$, Ar oder He) in den Gasvorerhitzer (2a) transportiert. Die weiteren Reaktionspartner (3) wie $H_2$, $NH_3$ und $CH_4$ werden ebenfalls in einem Gasvorwärmer (2) erhitzt, Vor Eintritt in den Rohrreaktor (4) werden die aus den Gasvorwärmern (2) austretenden turbulenten Einzelstromfäden in einer Düse (5) zu zwei koaxialen, laminaren und rotationssymmetrischen Stromfäden geformt. Im Rohrreaktor (4) durchmischen sich der mittlere Stromfaden (6), der die Metallkomponente enthält, und der umhüllende Stromfaden (7), der die restlichen Reaktionspartner enthält, unter definierten Bedingungen. Dabei tritt die Reaktion bei Temperaturen zwischen 500°C und 2000°C z.B. gemäß folgenden Fallbeispielen ein:

$$TiCl_4 + NH_3 + 1/2\ H_2 \rightarrow TiN + 4\ HCl\ oder$$

$$TiCl_4 + CH_4 \rightarrow TiC + 4\ HCl\ oder$$

$$AlCl_3 + NH_3 \rightarrow AlN + 3\ HCl\ oder$$

$$TiCl_4 + 2BCl_3 + 5H_2 \rightarrow TiB_2 + 10\ HCl\ oder$$

$$TaCl_5 + CH_4 + 1/2\ H_2 \rightarrow TaC + 5\ HCl\ oder$$

$$4BCl_3 + CH_4 + 4H_2 \rightarrow B_4C + 12\ HCl\ oder$$

$$MoCl_5 + 2SiCl_4 + 6\ 1/2\ H_2 \rightarrow MoSi_2 + 13\ HCl\ oder$$

$$3SiH_4 + 4NH_3 \rightarrow Si_3N_4 + 12\ H_2$$

Um die Durchmischung der beiden koaxialen Stromfäden sicherzustellen, kann durch Einbau eines Störkörpers (17) in der ansonsten streng laminaren Strömung eine Karman'sche Wirbelstraße erzeugt werden. Die beiden koaxialen Stromfäden werden am Düsenaustritt durch einen schwachen Inertgasstrom (16) getrennt, um Anwachsungen an der Düse (5) zu verhindern.

Um die energetisch stark bevorzugte heterogene Abscheidung dieser Stoffe an der heißen Reaktorwand zu unterbinden, wird diese durch Ringspalte (8) hindurch mit einem Inertgasstrom (9) ($N_2$, Ar oder He), der über den Coandaeffekt an der Reaktorwand anliegt, gespült. Die im Reaktor durch eine homogene Abscheidung aus der Gasphase entstandenen Keramikpulverpartikel verlassen diesen gemeinsam mit den gasförmigen Reaktionsprodukten (z.B. HCl), den Inertgasen und den nicht umgesetzten Reaktanden und gelangen direkt in einen Rückblasfilter (10), in dem sie abgeschieden werden. Der Rückblasfilter (10) wird bei Temperaturen zwischen 300°C und 1000°C betrieben, wodurch die Adsorption der Gase, insbesondere der nichtinerten Gase wie HCl,

$NH_3$ und $TiCl_4$, an der sehr großen Oberfläche dieser Pulver auf einem niedrigen Niveau gehalten wird. Außerdem wird die Bildung von $NH_4Cl$ aus überschüssigem $NH_3$ (bei der Herstellung von Metallnitriden) und HCl unterbunden. In einem anschließenden Behälter (11) werden die Reste der adsorbierten Gase auf den Pulvern durch bevorzugt wechselweises Anlegen von Vakuum und Fluten mit verschiedenen Gasen bei 300°C bis 1 000°C weiter reduziert. Gute Wirkungen werden erzielt, wenn Gase wie $N_2$, Ar oder Kr eingesetzt werden. Besonders bevorzugt wird $SF_6$ eingesetzt.

Nach diesem Verfahren ist auch die Herstellung metastabiler Stoffsysteme und Partikel mit Kern/Mantel-Strukturen möglich. Dabei werden metastabile Stoffsysteme durch Einstellung sehr hoher Abkühlgeschwindigkeiten im unteren Teil des Reaktors erhalten.

Die Partikel mit Kern/Mantel-Struktur werden erhalten, indem im unteren Teil des Reaktors zusätzliche Reaktionsgase eingebracht werden.

Aus dem Evakuierbehälter (11) gelangen die Pulver in den Abkühlbehälter (12), bevor sie durch die Schleuse (13) in den Sammel- und Versandbehälter (14) gelangen. In dem Abkühlbehälter (12) können durch Einblasen verschiedener Gas/Dampfgemische die Partikeloberflächen in definierter Weise oberflächenmodifiziert werden.

Als Werkstoff für diejenigen Bauteile, die Temperaturen bis 2000°C und mehr ausgesetzt sind, wie Wärmetauscher (2) und (3), Düse (5), Reaktor (4) und Reaktorhüllrohr (15), kann bevorzugt beschichteter Graphit, insbesondere Feinkorngraphit, eingesetzt werden. Eine Beschichtung kann z.B. erforderlich sein, wenn die notwendige chemische Beständigkeit des Graphits gegen die eingesetzten Gase wie Metallchloride, HCl, $H_2$, $NH_3$ und $N_2$, bei den gegebenen Temperaturen nicht ausreichend ist oder wenn die Erosion bei höheren Strömungsgeschwindigkeiten (0,5-50 m/sec) ganz erheblich ist oder wenn die Gasdichtigkeit des Graphits dadurch erhöht werden kann oder wenn die Oberflächenrauhigkeit der Reaktorbauteile damit herabgesetzt werden kann.

Als Schichten können z.B. SiC, $B_4C$, TiN, TiC und Ni (nur bis 1200°C) eingesetzt werden. Auch Kombinationen verschiedener Schichten, z.B. mit "arteigener" Deckschicht, sind möglich. Diese Schichten können vorteilhaft mittels CVD, Plasmaspritzen und Elektrolyse (Ni) aufgebracht werden.

Wenn nur niedrige Temperaturen notwendig sind, ist auch der Einsatz metallischer Werkstoffe möglich.

Zur Einstellung der Partikelgrößen der Keramikpulver können gleichzeitig drei Vorgehensweisen eingesetzt werden:

- Einstellen eines bestimmten Verhältnisses der Reaktions- und Inertgase.

- Einstellen eines bestimmten Druckes.

- Einstellen eines bestimmten Temperatur-Verweilzeit-Profils längs der Reaktorachse.

Das Temperatur-Verweilzeit-Profil wird wie folgt eingestellt:

- Durch zwei oder mehrere Heizzonen vom Beginn der Gasvorwärmer (2) bis zum Ende des Rohrreaktors (4).

- Durch Variation des Reaktorquerschnitts entlang seiner Längsachse.

- Durch Variation der Gasdurchsätze und damit bei vorgegebenem Reaktorquerschnitt der Strömungsgeschwindigkeiten.

Ein wesentlicher Vorteil der Variierbarkeit des Temperatur-Verweilzeit-Profils ist die Möglichkeit der Entkopplung der Keimbildungszone von der Keimwachstumszone. Damit ist es möglich, für die Herstellung "gröberer" Pulver (z.B. der Bereich ~ 0,1 μm bis ~ 3 μm für TiN) bei sehr niedriger Temperatur und kleiner Verweilzeit (d.h. kleiner Reaktorquerschnitt für eine bestimmte Länge) die Bildung von nur wenigen Keimen zuzulassen, die dann bei hoher Temperatur und großer Verweilzeit (großer Reaktorquerschnitt) zu "groben" Partikeln aufwachsen können. Ebenso ist es möglich, "feine" Pulver (z.B. für TiN der Bereich ~ 3 nm bis ~ 100 nm) herzustellen: in einem Bereich hoher Temperatur und relativ langer Verweilzeit wird die Bildung sehr vieler Keime erreicht, die im weiteren Reaktor bei niedrigen Temperaturen und kurzer Verweilzeit (kleiner Reaktorquerschnitt) nur noch gering aufwachsen. Die Einstellung sämtlicher Übergänge zwischen den hier qualitativ dargestellten Grenzfällen ist möglich.

Im Abkühlbehälter (12) ist durch Einblasen eines geeigneten Gas-/Dampf-Gemisches eine Passivierung der z.T. sehr luftempfindlichen bis pyrophoren Pulver möglich. Die Partikeloberflächen dieser Keramikpulver können sowohl mit einer Oxidschicht definierter Dicke als auch mit geeigneten organischen Verbindungen wie höhere Alkohole, Amine oder gleich Sinterhilfsmitteln wie Paraffine in einem inerten Trägergasstrom belegt werden. Die Beschichtung kann auch im Hinblick auf die Weiterverarbeitungsmöglichkeiten der Pulver durchgeführt werden.

Die Oxidschichten können z.B. mit einem definiert angefeuchteten Inertgas-Luft-Strom als auch mit einem Inertgas/$CO_2$-Strom (vorzugsweise für Carbide geeignet) aufgebracht werden.

Die erfindungsgemäßen nanoskaligen Pulver eignen sich aufgrund ihrer mechanischen, elektrischen und magnetischen Eigenschaften für die Herstellung von neuartigen Sensoren, Aktoren, Schneidkeramiken, Strukturkeramiken und Cermets.

Im folgenden wird die Erfindung weiter beispielhaft erläutert, ohne daß hierin eine Einschränkung zu sehen ist.

Beispiel 1

TiN wurde gemäß der Reaktionsgleichung

$$TiCl_4 + NH_3 + 1/2\ H_2 \rightarrow TiN + 4HCl$$

in einer Apparatur gemäß Fig. 1 hergestellt, wobei ein Überschuß an $NH_3$ und $H_2$ eingehalten wurde.

Hierzu wurden 100 g/min $TiCl_4$ (flüssig, Siedepunkt 136°C) in den Verdampfer (1) dosiert, verdampft und gemeinsam mit 50 Nl/min $N_2$ auf 800°C erhitzt. Dieses Gasgemisch wurde in den Gasvorwärmer (2a) geleitet. Die Reaktionspartner $H_2$ (200 Nl/min) und $NH_3$ (95 Nl/min) wurden in den Gasvorwärmer (2) eingebracht. Die Reaktionspartner wurden getrennt voneinander auf eine Temperatur von etwa 1000°C vorerhitzt. Die Temperaturmessung erfolgte dabei mit einem W5Re-W26Re-Thermoelement (18) an der in Fig. 1 bezeichneten Stelle (1175°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsbeginns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 3,0 mm (in der Düsenlängsachse angeordnet) eine Karman'sche Wirbelstraße erzeugt. Das Reaktionsrohr hatte bei einer Gesamtlänge von 1100 mm am Düsenaustritt einen Innendurchmesser von 40 mm, 200 mm unterhalb der Düse einen Innendurchmesser von 30 mm und am Ausgang 50 mm. Dabei wurde der Innenquerschnitt unter Beachtung der Strömungsgesetze stetig verändert. Das Reaktionsrohr (4) wurde aus 18 Segmenten zusammengesetzt, wobei die Segmente jeweils durch einen Distanz- und Zentrierring verbunden wurden. An diesen Stellen wurde jeweils ein Ringspalt (8) realisiert. Als Temperatur des Reaktionsrohres (4) wurde 1080°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 18 Ringspalte (8) hindurch mit 200 Nl/min $N_2$ gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch den 6. Ringspalt von unten mit einer zusätzlichen Gaseinleitvorrichtung

200 Nl/min $N_2$ in das Reaktionsrohr (4) eingeblasen. Das Produkt (TiN mit einer einheitlichen Partikelgröße von ~10 nm) wurde in dem Rückblasfilter (10) bei einer Temperatur von 600°C von den Gasen ($H_2$, $NH_3$, HCl, $N_2$) abgetrennt.

Die Wahl dieser Temperatur erfolgte einerseits, um die Bildung von $NH_4Cl$ zu verhindern (>350°C), und andererseits, um die Primärbelegung der sehr großen Partikeloberflächen (115 m²/g) mit HCl auf einem niedrigen Niveau zu halten (~1,5 % Cl).

Das so hergestellte TiN wurde 40 min (d.h. 1300 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte TiN-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiN-Pulver zeigte bei einer spezifischen Oberfläche von 115 m²/g, nach BET, gemessen nach der $N_2$-1-Punkt-Methode (DIN 66 131), entsprechend 10 nm, eine extrem enge Kornverteilung.

Eine REM-Aufnahme dieses TiN-Pulvers mit einer spezifischen Oberfläche von 115 m²/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiN-Pulvers ergab einen Sauerstoffgehalt von 95 ppm und die Summe der nicht-oxidischen Verunreinigungen betrug 800 ppm.

Beispiel 2

TiN wurde gemäß der Reaktionsgleichung

$$TiCl_4 + NH_3 + 1/2\ H_2 \rightarrow TiN + 4HCl$$

in einer Apparatur gemäß Fig. 1 hergestellt, wobei ein Überschuß an $NH_3$ und $H_2$ eingehalten wurde.

Hierzu wurden 100 g/min $TiCl_4$ (flüssig, Siedepunkt 136°C) in den Verdampfer (1) dosiert, verdampft und gemeinsam mit 50 Nl/min $N_2$ auf 950°C erhitzt. Dieses Gasgemisch wurde in den Gasvorwärmer (2a) geleitet. Die Reaktionspartner $H_2$ (200 Nl/min) und $NH_3$ (95 Nl/min) wurden in den Gasvorwärmer (2) eingebracht. Die Reaktionspartner wurden getrennt voneinander auf eine Temperatur von etwa 700°C vorerhitzt. Die Temperaturmessung erfolgte dabei mit einem W5Re-W26Re-Thermoelement (18) an der in Fig. 1 bezeichneten Stelle (850°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsgebinns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 4,0 mm (in der Düsenlängsachse angeordnet) eine Karman'sche Wirbelstraße erzeugt. Das Reaktionsrohr hatte bei einer Gesamtlänge von 1320 mm am Düsenaustritt einen Innendurchmesser von 25 mm, von 120 mm bis 180 mm unterhalb der Düse weitere der Innendurchmesser auf 48 mm auf; am Ausgang betrug er 65 mm. Dabei wurde der Innenquerschnitt unter Beachtung der Strömungsgesetze stetig verändert. Das Reaktionsrohr (4) wurde aus 22 Segmenten zusammengesetzt, wobei die Segmente jeweils durch einen Distanz- und Zentrierring verbunden wurden. An diesen Stellen wurde jeweils ein Ringspalt (8) realisiert.

Als Temperatur des Reaktionsrohres (4) wurde 1570°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 22 Ringspalte (8) hindurch mit 200 Nl/min $N_2$ gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch einen weiteren Ringspalt im 6. Segment von unten mit einer zusätzlichen Gaseinleitvorrichtung 200 Nl/min Ar in das Reaktionsrohr (4) eingeblasen. Das Produkt (TiN mit einer einheitlichen Partikelgröße von ~50 nm) wurde in dem Rückblasfilter (10) bei einer Temperatur von 600°C von den Gasen ($H_2$, $NH_3$, HCl, $N_2$) abgetrennt.

Die Wahl dieser Temperatur erfolgte einerseits, um die Bildung von $NH_4Cl$ zu verhindern (>350°C), und andererseits, um die Primärbelegung der sehr großen Partikeloberflächen (41,5 m²/g) mit HCl auf einem niedrigen Niveau zu halten (~1 % Cl).

Das so hergestellte TiN wurde 40 min (d.h. 1300 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte TiN-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiN-Pulver zeigte bei einer spezifischen Oberfläche von 41,5 m²/g, nach BET, gemessen nach der $N_2$-1-Punkt-Methode (DIN 66 131), entsprechend 50 nm, eine extrem enge Kornverteilung.

Eine REM-Aufnahme dieses TiN-Pulvers mit einer spezifischen Oberfläche von 41,5 m²/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiN-Pulvers ergab einen Sauerstoffgehalt von 70 ppm und eine Summe der nicht-oxidischen Verunreinigungen von 820 ppm.

Beispiel 3

TiC wurde gemäß der Reaktionsgleichung

$$TiCl_4 + CH_4 \rightarrow TiC + 4HCl$$

in einer Apparatur gemäß Fig. 1 hergestellt, wobei ein geringer Überschuß an $CH_4$ eingehalten und zusätzlich $H_2$ zugegeben wurde.

Hierzu wurden 90 g/min $TiCl_4$ (flüssig, Siedepunkt 136°C) in den Verdampfer (1a) dosiert, verdampft und gemeinsam mit 50 Nl/min Ar im Gasvorwärmer (2a) auf 1200°C erhitzt. Die Reaktionspartner $H_2$ (170 Nl/min) und $CH_4$ (25 Nl/min) wurden in den Gasvorwärmer (2) eingebracht. Die Reaktionspartner wurden getrennt voneinander auf eine Temperatur von etwa 1050°C vorerhitzt. Die Temperaturmessung erfolgte dabei mit einem W5Re-W26Re-Thermoelement (18) an der in Fig. 1 bezeichneten Stelle (1200°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. In diesem mittleren Stromfaden wurde mit dem Störkörper (17), mit einer kennzeichnenden Abmessung von 4,0 mm (in der Düsenlängsachse angeordnet), eine Karman'sche Wirbelstraße erzeugt. Das Reaktionsrohr hatte bei einer Gesamtlänge von 1320 mm am Düsenaustritt einen Durchmesser von 25 mm, von 120 bis 180 mm unterhalb der Düse weitete der Durchmesser auf 48 mm auf; am Ausgang betrug er 65 mm. Dabei wurde der Innenquerschnitt unter Beachtung der Strömungsgesetze stetig verändert, Das Reaktionsrohr (4) wurde aus 22 Segmenten zusammengesetzt, wobei die Segmente jeweils durch einen Distanz- und Zentrierring verbunden wurden. An diesen Stellen wurde jeweils ein Ringspalt (8) realisiert.

Als Temperatur des Reaktionsrohres (4) wurde 1700°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 22 Ringspalte (8) hindurch mit 200 Nl/min Ar gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch einen weiteren Ringspalt im 6. Segment von unten mit einer zusätzlichen Gaseinleitvorrichtung 200 Nl/min Ar in das Reaktionsrohr (4) eingeblasen. Das Produkt (TiC mit einer einheitlichen Partikelgröße von ~50 nm) wurde in dem Rückblasfilter (10) bei einer Temperatur von 600°C von den Gasen ($H_2$, $CH_4$, HCl, Ar) abgetrennt.

Die Wahl dieser Temperatur erfolgte, um die Primärbelegung der sehr großen Partikeloberflächen (45,6 $m^2/g$) mit HCl auf einem niedrigen Niveau zu halten (~1 % Cl).

Das so hergestellte TiC wurde 40 min (d.h. 1300 g) im Rückblasfilter gesammelt, um dann in den Evakuierbehälter (11) überführt zu werden, In diesem Behälter wurden in einem Zeitraum von 35 min 8 Pump-Flutcyclen mit Endvakui von 0,1 mbar abs, durchlaufen, Der Behälter wurde jeweils mit Ar bis auf einen Druck von 1100 mbar abs. geflutet. Nach Ablauf von 35 min. wurde das so behandelte TiC-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiC-Pulver zeigte bei einer spezifischen Oberfläche von 45,6 $m^2/g$, nach BET, gemessen nach der $N_2$-1-Punkt-Methode (DIN 66 131), entsprechend 10 nm, eine extrem enge Kornverteilung.

Eine REM-Aufnahme dieses TiC-Pulvers mit einer spezifischen Oberfläche von 45,6 $m^2/g$ zeigte die sehr enge Verteilung der Partikelabmessungen und die Überkornfreiheit, Weniger als 1 % der Einzelpartikel weisen danach eine Abweichung von mehr als 10 % und keine Einzelpartikel eine Abweichung von mehr als 40 % von der mittleren Korngröße auf, Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiC-Pulvers ergab einen Sauerstoffgehalt von 80 ppm und eine Summe der nicht-oxidischen Verunreinigungen von 890 ppm.

## Patentansprüche

1. Feinteilige Nichtoxid-Keramikpulver MeX, wobei

   Me =     B, Al, Si, Ti, Zr, Hf, Y, V, Ta, Nb, Mo, W, La, Fe, Co, Ni und/oder Cr und

   X =     C, N, B und Si oder Kombinationen daraus mit Ausnahme von $Si_3N_4$ größer als 100 nm und AlN größer als 200 nm, sind,

   dadurch gekennzeichnet, daß sie eine Partikelgröße zwischen 1,0 nm und 500 nm aufweisen und weniger als 1 % der Einzelpartikel eine Abweichung von mehr als 40 % und keine Einzelpartikel eine Abweichung von mehr als 60 % von der mittleren Korngröße aufweisen.

2. Pulver gemäß Anspruch 1, dadurch gekennzeichnet, daß weniger als 1 % der Einzelpartikel eine Abweichung von mehr als 20 % und keine Einzelpartikel eine Abweichung von mehr als 50 % von der mittleren Korngröße aufweisen.

3. Pulver gemäß einem der Ansprüche 1 oder 2, dadurch gekennzeichnet, daß weniger als 1 % der Einzelpartikel eine Abweichung von mehr als 10 % und keine Einzelpartikel eine Abweichung von mehr als 40 % von der mittleren Korngröße aufweisen.

4. Pulver gemäß einem oder mehreren der Ansprüche 1 bis 3, dadurch gekennzeichnet, daß die Partikelgröße von 1 nm bis kleiner 100 nm beträgt.

5. Pulver gemäß einem oder mehreren der Ansprüche 1 bis 3, dadurch gekennzeichnet, daß die Partikelgröße von 1 nm bis kleiner 50 nm beträgt.

6. Pulver gemäß einem oder mehreren der Ansprüche 1 bis 5, dadurch gekennzeichnet, daß die Metallverbindungen WC, SiC, $B_4C$, ZrC, VC, HfC, $Mo_2C$, $Cr_3C_2$ sind.

7. Pulver gemäß einem oder mehreren der Ansprüche 1 bis 5, dadurch gekennzeichnet, daß die Metallverbindungen Nitride der Elemente B, Al, Si, Ti, Zr, Hf, V, Nb, Ta, Mo und W sind.

8. Pulver gemäß einem oder mehreren der Ansprüche 1 bis 7, dadurch gekennzeichnet, daß sie einen Sauerstoffgehalt von weniger als 5.000 ppm aufweisen.

9. Pulver gemäß einem oder mehreren der Ansprüche 1 bis 8, dadurch gekennzeichnet, daß sie einen Sauerstoffgehalt von weniger als 1.000 ppm aufweisen.

10. Pulver gemäß einem oder mehreren der Ansprüche 1 bis 9, dadurch gekennzeichnet, daß sie einen Sauerstoffgehalt von weniger als 100 ppm, bevorzugt weniger als 50 ppm, aufweisen.

11. Pulver gemäß einem oder mehreren der Ansprüche 1 bis 10, dadurch gekennzeichnet, daß die Summe ihrer Verunreinigungen, mit Ausnahme der oxidischen Verunreinigungen, kleiner als 5.000 ppm beträgt.

12. Pulver gemäß einem oder mehreren der Ansprüche 1 bis 11, dadurch gekennzeichnet, daß die Summe ihrer Verunreinigungen, mit Ausnahme der oxidischen Verunreinigungen, kleiner als 1.000 ppm beträgt.

13. Pulver gemäß einem oder mehreren der Ansprüche 1 bis 12, dadurch gekennzeichnet, daß die Summe ihrer Verunreinigungen, mit Ausnahme der oxidischen Verunreinigungen, kleiner als 200 ppm beträgt.

14. Pulver gemäß einem oder mehreren der Ansprüche 1 bis 13, dadurch gekennzeichnet, daß sie in Mengen von mehr als 1 kg vorliegen.

**Claims**

1. Fine non-oxide ceramic powders MeX, wherein

    Me =    B, Al, Si, Ti, Zr, Hf, V, Y, Ta, Nb, Mo, W, La, Fe, Co, Ni and/or Cr and

    X =    C, N, B and Si or combinations thereof, with the exception of $Si_3N_4$ greater than 100 nm and AIN greater than 200 nm,

    characterised in that they exhibit a particle size between 1.0 nm and 500 nm and that fewer than 1% of the individual particles exhibit a deviation of more than 40% and no individual particles exhibit a deviation of more than 60% from the average particle size.

2. Powders according to Claim 1, characterised in that fewer than 1% of the individual particles exhibit a deviation of more than 20% and no individual particles exhibit a deviation of more than 50% from the average particle size.

3. Powders according to one of Claims 1 or 2, characterised in that fewer than 1% of the individual particles exhibit a deviation of more than 10% and no individual particles exhibit a deviation of more than 40% from the average particle size.

4. Powders according to one or several of Claims 1 to 3, characterised in that the particle size ranges from 1 nm to less than 100 nm.

5. Powders according to one or several of Claims 1 to 3, characterised in that the particle size ranges from 1 nm to less than 50 nm.

6. Powders according to one or several of Claims 1 to 5, characterised in that the metallic compounds are WC, SiC, $B_4C$, ZrC, VC, HfC, $Mo_2C$, $Cr_3C_2$.

7. Powders according to one or several of Claims 1 to 5, characterised in that the metallic compounds are nitrides of the elements B, Al, Si, Ti, Zr, Hf, V, Nb, Ta, Mo and W.

8. Powders according to one or several of Claims 1 to 7, characterised in that they have an oxygen content of less than 5000 ppm.

9. Powders according to one or several of Claims 1 to 8, characterised in that they have an oxygen content of less than 1000 ppm.

10. Powders according to one or several of Claims 1 to 9, characterised in that they have an oxygen content of less than 100 ppm, preferably less than 50 ppm.

11. Powders according to one or several of Claims 1 to 10, characterised in that the sum total of their contaminants, with the exception of the oxidic contaminants, amounts to less than 5000 ppm.

12. Powders according to one or several of Claims 1 to 11, characterised in that the sum total of their contaminants, with the exception of the oxidic contaminants, amounts to less than 1000 ppm.

13. Powders according to one or several of Claims 1 to 12, characterised in that the sum total of their contaminants, with the exception of the oxidic contaminants, amounts to less than 200 ppm.

14. Powders according to one or several of Claims 1 to 13, characterised in that they are available in quantities in excess of 1 kg.

**Revendications**

1. Poudres céramiques non oxydes finement divisées MeX, dans lesquelles
Me = B, Al, Si, Ti, Zr, Hf, Y, V, Ta, Nb, Mo, W, La, Fe, Co, Ni et/ou Cr et
X = C, N, B et Si ou des combinaisons de ceux-ci, à l'exception de $Si_3N_4$ supérieur à 100 nm et AIN supé-

rieur à 200 nm,
caractérisées en ce qu'elles présentent une taille de particules comprise entre 1,0 nm et 500 nm et moins de 1 % des particules individuelles présente une déviation supérieure à 40 % et aucune particule individuelle une déviation supérieure à 60 % de la taille moyenne de grains.

2. Poudres selon la revendication 1, caractérisées en ce que moins de 1 % des particules individuelles présente une déviation supérieure à 20 % et aucune particule individuelle une déviation supérieure à 50 % de la taille moyenne de grains.

3. Poudres selon l'une quelconque des revendications 1 ou 2, caractérisées en ce que moins de 1 % des particules individuelles présente une déviation supérieure à 10 % et aucune particule individuelle une déviation supérieure à 40 % de la taille moyenne de grains.

4. Poudres selon l'une ou plusieurs quelconques des revendications 1 à 3, caractérisées en ce que la taille de particules est comprise entre 1 nm et moins de 100 nm.

5. Poudres selon l'une ou plusieurs quelconques des revendications 1 à 3, caractérisées en ce que la taille de particules est comprise entre 1 nm et moins de 50 nm.

6. Poudres selon l'une ou plusieurs quelconques des revendications 1 à 5, caractérisées en ce que les composés métalliques sont WC, SiC, $B_4C$, ZrC, VC, HfC, $Mo_2C$, $Cr_3C_2$.

7. Poudres selon l'une ou plusieurs quelconques des revendications 1 à 5, caractérisées en ce que les composés métalliques sont des nitrures des éléments B, Al, Si, Ti, Zr, Hf, V, Nb, Ta, Mo et W.

8. Poudres selon l'une ou plusieurs quelconques des revendications 1 à 7, caractérisées en ce qu'elles présentent une teneur en oxygène inférieure à 5 000 ppm.

9. Poudres selon l'une ou plusieurs quelconques des revendications 1 à 8, caractérisées en ce qu'elles présentent une teneur en oxygène inférieure à 1 000 ppm.

10. Poudres selon l'une ou plusieurs quelconques des revendications 1 à 9, caractérisées en ce qu'elles présentent une teneur en oxygène inférieure à 100 ppm, de préférence inférieure à 50 ppm.

11. Poudres selon l'une ou plusieurs quelconques des revendications 1 à 10, caractérisées en ce que la somme de leurs impuretés, à l'exception des impuretés obtenues par voie d'oxydation, est inférieure à 5 000 ppm.

12. Poudres selon l'une ou plusieurs quelconques des revendications 1 à 11, caractérisées en ce que la somme de leurs impuretés, à l'exception des impuretés obtenues par voie d'oxydation, est inférieure à 1 000 ppm.

13. Poudres selon l'une ou plusieurs quelconques des revendications 1 à 12, caractérisées en ce que la somme de leurs impuretés, à l'exception des impuretés obtenues par voie d'oxydation, est inférieure à 200 ppm.

14. Poudres selon l'une ou plusieurs quelconques des revendications 1 à 13, caractérisées en ce qu'elles sont produites dans des quantités supérieures à 1 kg.

FIG.1